Europäisches Patentamt

**European Patent Office**

Office européen des brevets

(19)

(11) Numéro de publication : **0 023 853**
**B1**

(12)

# FASCICULE DE BREVET EUROPÉEN

(45) Date de publication du fascicule du brevet :
**11.05.83**

(51) Int. Cl.³ : **F 16 L 37/12, F 16 L 37/22**

(21) Numéro de dépôt : **80401034.6**

(22) Date de dépôt : **09.07.80**

(54) **Raccords pour tuyaux souples et analogues.**

(30) Priorité : **25.07.79 FR 7919168**
**06.06.80 FR 8012620**

(43) Date de publication de la demande :
**11.02.81 Bulletin 81/06**

(45) Mention de la délivrance du brevet :
**11.05.83 Bulletin 83/19**

(84) Etats contractants désignés :
**AT BE CH DE GB IT LI LU NL SE**

(56) Documents cités :
**CH A 349 461**
**FR A 1 486 149**
**US A 2 951 713**
**US A 3 039 794**
**US A 3 997 196**

(73) Titulaire : **Fremy, Raoul**
**1, rue des Iris**
**F-91540 Mennecy (FR)**

(72) Inventeur : **Fremy, Raoul**
**1, rue des Iris**
**F-91540 Mennecy (FR)**

(74) Mandataire : **Lemonnier, André**
**4 Boulevard Saint Denis**
**F-75010 Paris (FR)**

Jouve, 18, rue St-Denis, 75001 Paris, France

## Raccords pour tuyaux souples et analogues

La présente invention concerne un raccord pour la jonction de tuyaux souples ou similaires entre eux ou sur des éléments de tuyauterie rigides et plus particulièrement un raccord dit rapide du type constitué par un élément mâle susceptible de venir s'encliqueter à l'intérieur d'un élément femelle correspondant.

Un raccord de ce type a été décrit dans US-A-3.997.196. Dans ce raccord connu, l'élément femelle est constitué par un corps muni d'un alésage axial comportant intérieurement une gorge périphérique de verrouillage et l'élément mâle est constitué par un embout sur lequel est monté un dispositif de verrouillage susceptible de s'engager dans l'alésage axial de l'élément femelle, ledit dispositif de verrouillage étant constitué par un élément d'engagement déplaçable radialement pour venir en engagement dans la gorge de verrouillage prévue dans l'alésage axial de l'élément femelle et par un dispositif de commande du verrouillage contrôlant le déplacement radial vers l'extérieur de l'élément d'engagement vers sa position de verrouillage et susceptible d'être amené positivement dans une position de déverrouillage autorisant le dégagement de l'élément d'engagement de la gorge de l'élément femelle. Dans ce raccord, le dispositif de commande de verrouillage est constitué par un manchon monté mobile longitudinalement sur le corps cylindrique central de l'élément mâle, l'extrémité dudit manchon dirigée vers l'extrémité d'engagement de l'élément mâle formant une surface de came coopérant avec l'élément d'engagement afin de le déplacer radialement vers l'extérieur. Ce manchon constituant le dispositif de commande de verrouillage est sollicité élastiquement par un ressort vers la position de verrouillage dans laquelle il repousse radialement vers l'extérieur l'élément d'engagement.

Dans le raccord de ce type antérieurement décrit dans US-A-3.997.196 il est nécessaire de maintenir, à l'état désaccouplé du raccord, l'élément d'engagement dans la position déverrouillée contre la sollicitation élastique du ressort qui repousse le manchon formant le dispositif de commande vers la position amenant l'élément d'engagement en saillie. Dans ce brevet, ceci est obtenu par un dispositif d'immobilisation maintenant le manchon dans sa position reculée, l'élément d'engagement présentant lui-même une élasticité qui le sollicite vers sa position de dégagement.

Les inconvénients de ce raccord sont que, pour effectuer le raccordement, il faut pousser l'élément mâle dans l'élément femelle et libérer le manchon formant le dispositif de commande et, pour désaccoupler le raccord, il faut actionner le dispositif d'immobilisation pour maintenir le manchon dans sa position reculée, les deux opérations incluant deux manœuvres qui sont difficiles à effectuer simultanément. En outre à l'état désaccouplé, l'élément d'engagement est à nu et est susceptible d'être souillé ou bloqué en position par de la terre, des graviers ou autres.

La présente invention a pour but de créer un raccord du type ci-dessus dans lequel le raccordement s'effectue par un simple effort longitudinal d'engagement exercé sur les éléments mâle et femelle et le désaccouplement par une simple traction exercée entre l'élément femelle et une pièce périphérique de l'élément mâle.

Elle a également pour but de créer un raccord de ce type dans lequel les organes mécaniques assurant le verrouillage et les joints d'étanchéité sont protégés contre la terre, les graviers et autres corps étrangers, à l'état désaccouplé du raccord.

Elle a également pour but de créer un raccord de ce type dans lequel l'élément d'engagement est, d'une manière connue pour d'autres types de raccords, constitué par une série de billes ou éléments analogues montés libres radialement dans des chambrages radiaux du corps de l'élément mâle.

Ces buts sont atteints conformément à l'invention du fait qu'une bague périphérique dite « gâchette » est montée coulissante à la périphérie de l'élément mâle pour, en position de désaccouplement du raccord, venir s'engager au-dessus de l'élément d'engagement pour le maintenir dans sa position rétractée à l'intérieur du corps de l'élément mâle.

Au cours de l'opération de raccordement la bague gâchette est repoussée par l'extrémité libre de l'élément femelle, l'élément d'engagement pénétrant dans l'alésage de l'élément femelle et étant repoussé radialement par le manchon de commande d'engagement, pour s'engager dans la gorge de verrouillage de l'élément femelle lorsqu'il se trouve en face de cette dernière. L'opération de raccordement s'effectue donc par un simple effort longitudinal d'engagement.

Selon une autre caractéristique de l'invention et pour obtenir un verrouillage automatique dans la position de désaccouplement, la bague gâchette est sollicitée élastiquement vers sa position d'engagement au-dessus de l'élément d'engagement. Avec cette caractéristique le désaccouplement s'effectue simplement en exerçant une traction entre l'élément femelle et le manchon formant dispositif de commande du verrouillage, la bague gâchette suivant automatiquement la face terminale de l'élément femelle pendant son retrait pour venir recouvrir l'élément d'engagement.

Selon une autre caractéristique, l'extrémité de la bague gâchette est conformée de manière à ce qu'elle coopère avec l'élément de verrouillage pour le repousser vers sa position de déverrouillage. L'élément de verrouillage peut de ce fait être constitué de la manière connue par des billes ou des tétons à tête hémisphérique dont le déplacement centrifuge dans leur logement solidaire de l'élément mâle sous l'action du dispositif de commande, est limité par une butée.

Selon un deuxième mode de réalisation, l'élément d'engagement est constitué par au moins un ergot monté mobile à l'une de ses extrémités autour d'un axe transversal et dont l'autre extrémité est chanfreinée pour coopérer avec la surface de came du manchon, le ou lesdits ergots étant maintenus en position par l'intermédiaire d'une bague-ressort.

Selon encore un autre mode de réalisation, l'élément d'engagement est constitué par une bague-ressort munie sur sa périphérie d'éléments en saillie tels que des billes, des rouleaux ou similaire, la surface de came du manchon de commande s'engageant à l'intérieur de ladite bague-ressort pour écarter les éléments en saillie.

Selon une autre caractéristique l'élément sollicitant élastiquement la bague-gâchette vers sa position d'engagement est constitué par un ressort de compression logé dans un évidement cylindrique du dispositif de commande, logement dans lequel peut s'engager au moins partiellement la bague-gâchette lorsqu'elle est repoussée par l'engagement de l'élément femelle sur l'élément mâle.

La force du ressort repoussant la bague-gâchette est inférieure à celle sollicitant le dispositif de commande vers la position de verrouillage. Cette disposition protège le ressort de rappel de la bague-gâchette contre le bourrage par la terre ou analogue.

Selon encore une autre caractéristique le dispositif de commande comporte un moyen de blocage en position de verrouillage. Ce moyen de blocage est constitué de préférence par un ergot en saillie sur la surface périphérique de la partie fixe de l'élément mâle, ergot qui coopère pour former butée avec la face arrière du manchon du dispositif de commande et qui, pour une orientation déterminée de ce dernier, s'engage dans une saignée longitudinale de celui-ci.

La présente invention a également pour objet un raccord rapide à obturation automatique dans lequel la partie mécanique du dispositif de verrouillage est réalisée dans l'élément mâle et le dispositif de soupape pour l'obturation automatique, dans l'élément femelle.

Selon un mode de réalisation l'étanchéité entre l'élément femelle et l'élément mâle est assurée par un joint torique logé dans l'élément femelle et venant en appui sur la surface périphérique du nez de l'élément mâle qui vient repousser la soupape automatique logée dans l'élément femelle. La surface périphérique du nez de l'élément mâle est toutefois sujette à des rayures ou salissures qui peuvent réduire l'étanchéité. Pour y remédier et selon une autre caractéristique le corps tubulaire de la soupape automatique est prolongé par un nez s'engageant à l'intérieur du forage du nez de l'élément mâle à l'intérieur duquel est logé un joint torique et un joint torique monté à la périphérie du corps tubulaire de la soupape coopère dans les positions d'accouplement du raccord avec une portée cylindrique interne de l'élément femelle.

D'autres caractéristiques et avantages de la présente invention apparaîtront à la lecture de la description détaillée de divers modes de réalisation du raccord conforme à celle-ci faite ci-après avec référence aux dessins ci-annexés dans lesquels :

La figure 1 schématise le fonctionnement du dispositif de verrouillage d'un raccord de type connu que concerne l'invention ;

la figure 2 est une vue en demi-coupe longitudinale d'un premier mode de réalisation de l'élément mâle du raccord ;

la figure 3 est une vue correspondant à la figure 2 avec l'élément femelle verrouillé sur l'élément mâle ;

la figure 4 est une vue correspondant à la figure 2 au moment du déverrouillage du raccord ;

la figure 5 est une vue de détail illustrant un premier mode de réalisation de la bague élastique qui constitue un élément du raccord selon les figures 2 à 4 ;

la figure 6 est une vue de détail en perspective d'un galet de la bague élastique de figure 5 ;

la figure 7 est une vue en élévation d'un second mode de réalisation de la bague élastique ;

la figure 8 illustre en perspective un troisième mode de réalisation de ladite bague élastique ;

la figure 9 est une vue correspondant à la figure 2 pour un deuxième mode de réalisation du raccord ;

la figure 10 est une vue analogue à la figure 4 représentant l'élément mâle de la figure 9 à l'état de verrouillage avec l'élément femelle correspondant ;

la figure 11 représente en perspective la bague élastique qui, dans le mode de réalisation des figures 9 et 10, rappelle élastiquement les ergots dans la position de déverrouillage ;

la figure 12 est une vue en perspective d'un des ergots de verrouillage du raccord selon les figures 9 et 10 ;

la figure 13 est une vue correspondant à la figure 2 pour un troisième mode de réalisation du raccord ;

la figure 14 est une vue analogue à la figure 4 représentant l'élément mâle de la figure 13 à l'état de verrouillage avec l'élément femelle correspondant ;

la figure 15 est une vue en perspective de l'élément de verrouillage du raccord des figures 13 et 14 ;

la figure 16 est une vue en demi-élévation et demi-coupe longitudinale d'un raccord selon un quatrième mode de réalisation à l'état accouplé ;

la figure 17 est une vue correspondante de l'élément mâle du raccord de figure 16 et

la figure 18 est une vue en coupe par A-A de figure 17.

Dans l'ensemble des figures les mêmes éléments ou les éléments équivalents sont désignés par les mêmes références. La référence 1 désigne dans son ensemble l'élément femelle du raccord, 2 la gorge réalisée dans l'alésage interne de l'élément femelle, 3 le joint torique prévu dans le même alésage pour coopérer avec la portée cylindrique du nez de l'élément mâle, 4 la soupape d'obturation montée dans l'élément femelle qui est soulevée de son siège 5 par la poussée de l'élément mâle, 6 le joint torique de la soupape d'obturation. Dans l'élément mâle la référence 7 désigne le corps tubulaire de l'élément qui comporte à sa partie arrière une olive 8 ou similaire pour la solidarisation avec un tuyau souple. Sur le corps tubulaire 7 est rapporté et par exemple fixé par un filetage 9, un nez 10 qui forme la portée cylindrique avec laquelle coopère le joint torique 3 mais qui constitue également une butée 11 pour l'organe de verrouillage.

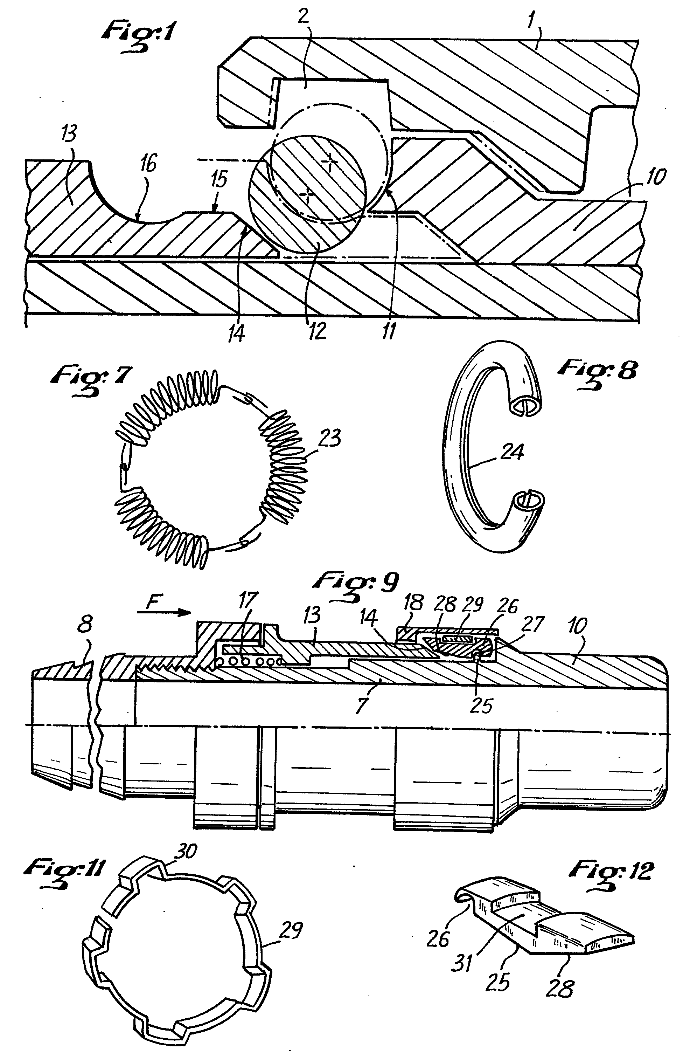

Dans la figure 1 qui illustre l'art connu on a représenté certains des éléments décrits ci-dessus. L'organe de verrouillage 12 est constitué par un élément de section circulaire, par exemple une bague, enfilé sur le corps tubulaire 7 entre la butée 11 du nez 10 et un manchon 13 qui est mobile longitudinalement sur le corps tubulaire 7. Cette bague 12 présente une élasticité qui tend à la mettre en appui sur la surface périphérique du corps 7. L'extrémité 14 du manchon 13 a une forme tronconique, la section en coin de cette partie étant destinée à s'engager sous la bague élastique 12, maintenue par la butée 11, pour la dilater. La partie tronconique 14 est suivie par une partie cylindrique 15 qui se termine par une gorge 16. Les diamètres externe et interne et le diamètre de la section de la bague 12 sont tels que lorsqu'elle est en appui sur le corps tubulaire 7 comme représenté en trait plein à la figure 1, la bague ne fait pas saillie par rapport à l'élément mâle et peut être engagée dans l'alésage de l'élément femelle. Par contre, lorsque la bague 12 se trouve engagée dans la gorge 16, son diamètre externe dilaté est supérieur à celui de l'alésage interne de l'élément femelle 1 et si, comme représenté en tireté, elle est dilatée au droit de la gorge de verrouillage 2, elle vient en saillie dans cette gorge pour verrouiller les éléments mâle et femelle du raccord. Pour la fermeture du raccord, la partie femelle 1 est engagée sur la partie mâle et on exerce sur le manchon 13 une poussée dans le sens de la flèche F, de manière à engager la partie tronconique 14 sous la bague 12 qui est en butée contre la butée 11 du nez 10. La bague 12 se dilate en s'engageant dans la gorge 2 jusqu'à ce que son diamètre interne dilaté lui permette de passer sur la portée 15. Lorsqu'elle arrive au droit de la gorge 16, la bague se rétracte légèrement tout en restant engagée dans la gorge de verrouillage 2 de l'élément femelle 1. Les efforts tendant à faire sortir l'élément mâle de l'élément femelle 1, notamment la pression interne dans la canalisation, sont transmis du bord externe de la gorge 2 à la surface de butée 11 du nez 10 de l'élément mâle par la bague 12. Pour désaccoupler le raccord, on déplace le manchon 13 par rapport au corps tubulaire 7 et au nez 10 dans le sens inverse de la flèche F en dilatant d'abord la bague 12 pour la faire passer au-dessus de la portée 15, ladite bague 12 se rétractant ensuite en se dégageant de la gorge 2. On notera que la bague élastique 12 coopère avec la gorge 16 pour réaliser un verrouillage, en position de verrouillage du raccord, du manchon 13 qui constitue l'organe de commande du verrouillage.

Le raccord constitué comme décrit avec référence à la figure 1 est d'un type connu. Il présente l'inconvénient de nécessiter une action positive sur le manchon. La présente invention a pour but de réaliser sur le même principe un raccord à accouplement automatique. Un tel raccord est représenté dans les figures 2 à 4 dans lesquelles les mêmes éléments sont désignés par les mêmes références. A la différence du mode de réalisation de la figure 1, un ressort hélicoïdal 17 logé entre le corps tubulaire 7 et le manchon 13 agit entre deux épaulements de ces deux pièces pour solliciter le manchon 13 dans le sens de la flèche F avec une force suffisante pour dilater la bague élastique 12 en butée contre la butée 11 du nez 10 afin de la faire passer sur la partie tronconique 14 et la portée 15 jusqu'à la gorge 16. Il n'y a de ce fait pas lieu d'exercer manuellement la force F pour obtenir le verrouillage. Toutefois lorsque l'élément mâle est désaccouplé, le ressort 17 amène la bague 12 dans la gorge 16, position dans laquelle il n'est pas possible d'engager l'élément femelle sur l'élément mâle. Pour remédier à cet inconvénient il est nécessaire de prévoir une gâchette qui neutralise l'action du ressort 17 pendant le désaccouplement. Cette gâchette est réalisée par une douille 18 montée coulissante sur le manchon 13, douille qui par une de ses parties 19 vient entourer la bague 12 pour l'empêcher de se dilater. La bague 18 peut être sollicitée manuellement au cours de l'opération de désaccouplement représentée dans la figure 4 selon la flèche F″ opposée à la force F′ exercée sur le manchon 13 de manière à ce qu'elle suive la partie femelle 1 dans son mouvement de désengagement jusqu'à venir occuper la position représentée à la figure 2. Ce déplacement en suivant la partie femelle 1 est de préférence assuré automatiquement par un ressort 20 agissant entre la bague 18 et un épaulement du manchon 13. Lors de l'accouplement la face d'extrémité de l'élément femelle prend appui contre la face d'extrémité de la bague 18 pour repousser cette dernière contre l'action du ressort 20 jusqu'à ce que la bague 12 s'engage dans l'alésage de l'élément femelle et vienne s'engager, sous la poussée du ressort 17 s'exerçant par la face tronconique 14 du manchon 13, dans la gorge 2 de l'élément femelle 1.

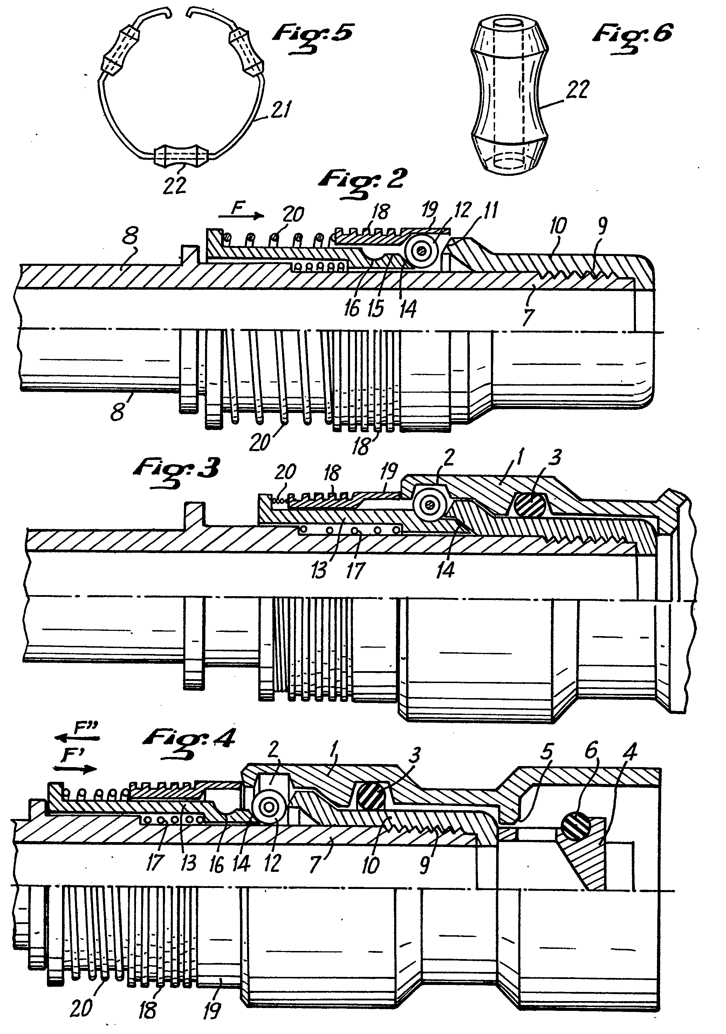

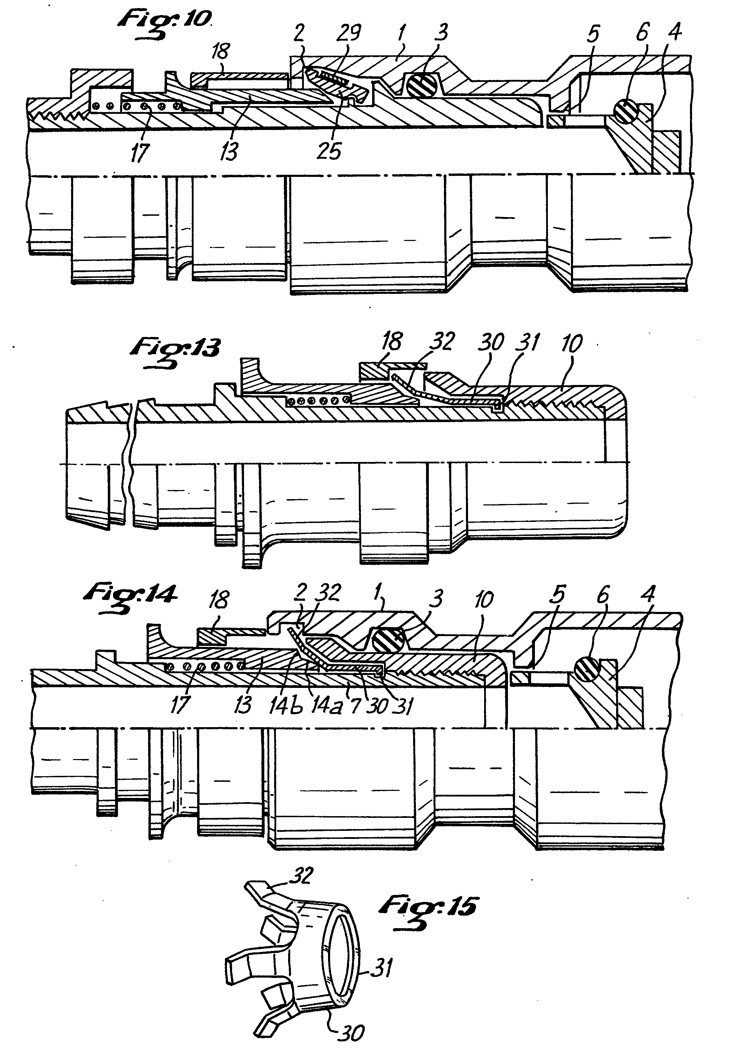

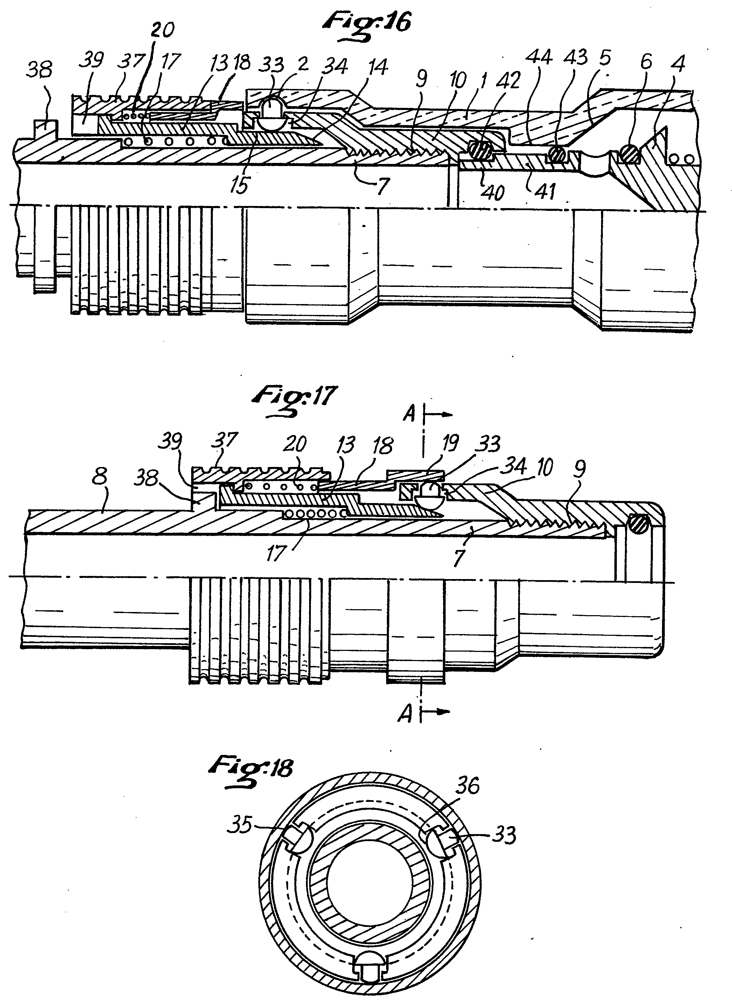

La bague 12 peut, comme représenté à la figure 5, être réalisée par un anneau élastique 21 sur lequel sont enfilés des billes ou des éléments en diabolo 22 tels que celui représenté à la figure 6. Cette bague 12 peut également être constituée par un ressort à boudin ou, comme représenté à la figure 7, par trois petits ressorts 23 ou comme représenté à la figure 8 par une bague torique fendue 24.

Dans le mode de réalisation illustré dans les figures 9 à 12 l'élément de verrouillage du raccord est constitué par un certain nombre (cinq dans le présent cas) de cliquets 25 (figure 12) de forme générale en parallélépipède plat dont une extrémité présente une gorge 26 destinée à s'engager sur une nervure 27 du corps tubulaire 7 de l'élément mâle pour former un genre d'articulation à charnière tandis que l'autre extrémité est chanfreinée en 28 pour coopérer avec la surface tronconique 14 du manchon 13. Les cliquets 25 sont maintenus serrés élastiquement sur la périphérie du corps 7 par une bague 29 représentée à la figure 11 laquelle comporte des secteurs en pont 30 régulièrement répartis angulairement et destinés à s'engager chacun dans une gorge 31 prévue sur la face extérieure de chaque cliquet 25 pour maintenir lesdits cliquets en position. Le manchon 13 est également poussé dans la direction de la flèche F par un ressort 17 et une bague formant gâchette 18 est montée coulissante à la périphérie du manchon 13. Il est toutefois à remarquer que dans ce mode de réalisation les cliquets 25, à la différence de la bague 12, ne sont pas encliquetés en position d'ouverture par un organe analogue à la gorge 16 et qu'il suffit de repousser le manchon 13 contre la force du ressort 17 pour que les cliquets 25 reviennent dans leur position de déverrouillage représentée à la figure 9. Dans ce mode de réalisation le nez 10 est réalisé en une seule pièce décolletée avec le corps 7 et c'est l'olive 8 et la partie d'embase de l'élément mâle qui en est solidaire qui est raccordée par vissage au corps 7 de l'élément mâle.

Le mode de réalisation des figures 13 à 15 est analogue aux modes de réalisation précédents mais l'élément de verrouillage est constitué de manière connue par une bague à branches élastiques représentée en perspective à la figure 15. Cette bague comporte un corps tubulaire 30 se terminant à une extrémité par un flasque intérieur 31 qui est emprisonné au montage dans le joint entre le corps 7 et le nez 10. A son autre extrémité le corps 30 se prolonge par des bras en lamelles 32 qui s'évasent selon deux troncs de cône successifs. Sous les bras vient s'engager l'extrémité 14 du manchon coulissant 13, cette extrémité 14 étant constituée par deux surfaces tronconiques 14a, 14b qui viennent repousser les branches 32 contre la portée 11 du nez 10 en les déformant élastiquement de manière qu'elles viennent en saillie pour s'engager dans la gorge 2 de l'élément femelle comme représenté à la figure 14. Lorsque le manchon 13 est dégagé dans la direction de la flèche F' en surmontant l'action du ressort 17, les branches 32 reprennent leur position éclipsée et le raccord peut être désaccouplé. Dans ce mode de réalisation également un manchon formant gâchette 18 empêche les branches 32 de s'écarter sous l'action du manchon 13 poussé par le ressort 17.

Dans le mode de réalisation des figures 16 à 18, l'élément d'encliquetage est constitué par une pluralité de billes (non représentées) ou de tétons mobiles 33 logés dans des chambrages 34 du nez 10. Chaque logement 34 est tel que la bille ou le téton 33 peut se déplacer entre une position pour laquelle il est en appui sur la partie cylindrique 15 du manchon 13 et fait saillie à la périphérie du nez 10 pour s'engager dans la gorge 2 de la partie femelle du raccord et une position où il est éclipsé à l'intérieur du nez 10. Dans le téton 33 la partie 35 venant en saillie est hémisphérique et la partie inférieure 36 est également en secteur sphérique ou analogue de manière que la première puisse coopérer avec le bord avant de l'extrémité 19 de la bague-gâchette pour repousser l'ergot 33 selon la direction centripète, et que la seconde, par coopération avec l'extrémité tronconique 14 du manchon 13, puisse le repousser vers l'extérieur pour assurer l'encliquetage. Dans le cas des billes ces formes résultent de la sphéricité des billes.

La mise en saillie des ergots 33 ou des billes est limitée soit par un gradin réalisé dans le logement 34, soit, de la manière connue, par un sertissage du bord extérieur de l'alésage constituant ce logement. Dans ce mode de réalisation une douille 37, cannelée ou moletée, coulisse à l'extérieur de la bague 18 en recouvrant le ressort 20, cette douille 37 est solidarisée au déplacement avec le manchon 13 au moins dans la direction assurant le déverrouillage. L'extrémité de l'élément femelle vient, lors de l'accouplement, en butée contre la face d'extrémité de la bague 18 et la repousse contre l'action du ressort 20.

Selon une autre caractéristique un ergot 38 est en saillie sur la partie périphérique cylindrique du corps 7 de l'élément mâle et il vient en butée avec la face arrière du manchon 13, pour bloquer celui-ci contre l'action de déverrouillage décrite ci-après, ou en face d'une saignée longitudinale 39 réalisée dans le manchon 13 pour permettre ce déverrouillage.

Pour le déverrouillage, l'ergot 38 étant en face de la saignée 39, on exerce la force de séparation correspondant à la force du ressort 17 entre la douille 37 et l'élément femelle 1. Les tétons 33 venant en face de la partie tronconique 14 sont repoussés vers l'intérieur par la forme de la gorge 2 et l'élément mâle s'extrait de l'élément femelle, la bague 18 poussée par le ressort 20 suivant l'élément femelle pour venir s'engager au-dessus des tétons 33, pour les maintenir dans la position de déverrouillage comme représenté dans la figure 2. Pour le verrouillage il suffit d'engager l'élément femelle sur l'élément mâle en repoussant la bague 18 contre l'action du ressort 20. Dès que les ergots 33 arrivent en face de la gorge 2, ils sont repoussés par la rampe 14 et le manchon 13 vient automatiquement en position de verrouillage sous la poussée du ressort 17.

L'étanchéité entre l'élément mâle et l'élément femelle est assurée par un nez 40 à l'extrémité du corps tubulaire 41 de la soupape 4, nez qui pénètre dans un suralésage du nez 10 de l'élément mâle, suralésage dans lequel est logé un joint torique 42. Un deuxième joint torique 43 à l'extérieur du corps tubulaire 41 de la soupape 4 coopère avec une portée cylindrique interne 44 de l'élément femelle.

## Revendications

1. Un raccord pour tuyaux souples et analogues dans lequel l'élément femelle (1) est constitué par un corps muni d'un alésage axial comportant intérieurement une gorge périphérique (2) de verrouillage et l'élément mâle (7) est constitué par un embout sur lequel est monté un dispositif de verrouillage susceptible de s'engager dans l'alésage axial de l'élément femelle (1), ledit dispositif de verrouillage étant constitué par un élément d'engagement (12) déplaçable radialement pour venir en engagement dans la gorge de verrouillage (2) prévue dans l'alésage axial de l'élément femelle (1) et par un dispositif de commande du verrouillage contrôlant le déplacement radial vers l'extérieur de l'élément d'engagement (12) vers sa position de verrouillage et susceptible d'être amené positivement dans une position de déverrouillage autorisant le dégagement de l'élément d'engagement (12) de la gorge (2) de l'élément femelle (1), le dispositif de commande de verrouillage étant constitué par un manchon (13) monté mobile longitudinalement sur le corps cylindrique central (7) de l'élément mâle, l'extrémité dudit manchon (13) dirigée vers l'extrémité d'engagement de l'élément mâle formant une surface de came (14-16) coopérant avec l'élément d'engagement (12) afin de le déplacer radialement vers l'extérieur et ce manchon (13) étant sollicité élastiquement par un ressort (17) vers la position de verrouillage dans laquelle il repousse radialement vers l'extérieur l'élément d'engagement (12), caractérisé en ce qu'une bague périphérique (18) dite « gachette » est montée coulissante à la périphérie de l'élément mâle (7, 13) pour, en position de désaccouplement du raccord, venir s'engager au-dessus de l'élément d'engagement (12) de façon à le maintenir dans sa position rétractée à l'intérieur du corps de l'élément mâle.

2. Un raccord selon la revendication 1, caractérisé en ce que la bague gachette (18) est sollicitée élastiquement (20) vers sa position d'engagement au-dessus de l'élément d'engagement (12).

3. Un raccord selon l'une quelconque des revendications 1 et 2, caractérisé en ce que l'extrémité (19) de la bague gâchette (18) est conformée de manière à ce qu'elle coopère avec l'élément d'engagement (12) pour le repousser vers sa position de déverrouillage.

4. Un raccord selon la revendication 3, caractérisé en ce que l'élément d'engagement est constitué par des billes ou des tétons (33) à tête hémisphérique dont le déplacement centrifuge dans leur logement (34) solidaire de l'élément mâle sous l'action du dispositif de commande, est limité par une butée (Figures 16-18).

5. Un raccord selon l'une quelconque des revendications 1 et 2, caractérisé en ce que l'élément d'engagement est constitué par au moins un ergot monté mobile à l'une (26) de ses extrémité autour d'un axe transversal et dont l'autre extrémité (28) est chanfreinée pour coopérer avec la surface de came (14) du manchon (13), le ou lesdits ergots étant maintenus en position par l'intermédiaire d'une bague-ressort (29) (Figures 9-11).

6. Un raccord selon l'une quelconque des revendications 1 et 2, caractérisé en ce que l'élément d'engagement est constitué par une bague-ressort (21) munie sur sa périphérie d'éléments en saillie tels que des billes, des rouleaux (22) ou similaires, la surface de came du manchon de commande s'engageant à l'intérieur de ladite bague-ressort pour écarter les éléments en saillie.

7. Un raccord selon l'une quelconque des revendications 1 à 6, caractérisé en ce que l'élément sollicitant élastiquement la bague-gâchette (18) vers sa position d'engagement est constitué par un ressort de compression (20) logé dans un évidement cylindrique du dispositif de commande (13), logement dans lequel peut s'engager au moins partiellement la bague-gâchette (18) lorsqu'elle est repoussée par l'engagement de l'élément femelle (1) sur l'élément mâle.

8. Un raccord selon l'une quelconque des revendications 1 à 7, caractérisé en ce que le dispositif de commande comporte un moyen de blocage en position de verrouillage.

9. Un raccord selon la revendication 8, caractérisé en ce que le moyen de blocage est constitué par un ergot en saillie sur la surface périphérique de la partie fixe de l'élément mâle, ergot qui coopère pour former butée avec la face arrière du manchon du dispositif de commande et qui, pour une orientation déterminée de ce dernier, s'engage dans une saignée longitudinale de celui-ci.

10. Un raccord selon l'une quelconque des revendications 1 à 9 du type à obturation automatique, caractérisé en ce que la partie mécanique du dispositif de verrouillage est réalisée dans l'élément mâle (7) et le dispositif de soupape (4) pour l'obsturation automatique, dans l'élément femelle (1).

11. Un raccord selon la revendication 10, caractérisé en ce que l'étanchéité entre l'élément femelle (1) et l'élément mâle est assurée par un joint torique (3) logé dans l'élément femelle et venant en appui sur la surface périphérique du nez (10) de l'élément mâle qui vient repousser la soupape automatique (4) logée dans l'élément femelle (1).

12. Un raccord selon la revendication 10, caractérisé en ce que le corps tubulaire de la soupape automatique (4) est prolongé par un nez s'engageant à l'intérieur du forage du nez (10) de l'élément mâle à l'intérieur duquel est logé un joint torique (3) et un joint torique (6) monté à la périphérie du corps tubulaire de la soupape (4) coopère dans les positions d'accouplement du raccord avec une portée cylindrique interne (5) de l'élément femelle.

## Claims

1. A coupling for hoses and the like wherein the female element (1) comprises a body provided with an axial bore having a peripheral locking recess (2) therein and the male element (7) comprises a nose piece having mounted thereon a locking device adapted to fit into the axial bore of the female element (1), said locking device comprising an engaging member radially displaceable to come into engagement in the locking recess (2) provided in the axial bore of the female element (1) and of a locking control device controlling the radially outward displacement of the engaging member (12) towards its locking position and adapted to be positively brought into an unlocking position allowing disengagement of the engaging member (12) from the recess (2) in the female element (1), the locking control device comprising a sleeve (13) mounted for longitudinal movement on the central cylindrical body (7) of the male element, that end of said sleeve (13) which is directed toward the engaging end of the male element forming a cam surface (14-16) which coacts with the engaging member (12) so as to displace it radially outwards and such sleeve (13) being urged by a spring (17) toward the locking position wherein it presses the engaging member (12) radially outwards, characterized in that a peripheral so called « trigger » ring (18) is slidably mounted on the periphery of the male element (7, 13) for, in the uncoupled position of the coupling, coming to fit over the engaging member (12) so as to keep it in its retracted position within the body of the male element.

2. A coupling according to claim 1, characterized in that the trigger ring (18) is urged (20) towards its position fitting over the engaging member (12).

3. A coupling according to either of claims 1 and 2, characterized in that the end (19) of the trigger ring (18) is so shaped as to coact with the engaging member (12) for pushing it towards its unlocked position.

4. A coupling according to claim 3, characterized in that the engaging member comprises balls or hemispherical-headed studs (33) whose centrifugal movement within their seat (34) integral with the male element under the action of the control device, is limited by an abutment (figures 16-18).

5. A coupling according to either of claims 1 and 2, characterized in that the engaging member comprises at least one lug movably mounted at one (26) of its ends about a transverse axis and having its other end (28) bevelled to coact with the cam surface (14) of the sleeve (13), said lug or lugs being held in position through a spring ring (29) (Figures 9-11).

6. A coupling according to either of claims 1 and 2, characterized in that the engaging member comprises a spring ring (21) provided on its periphery with projecting elements such as balls, rollers (22) or the like, the cam surface of the control sleeve fitting within said spring ring to urge the projecting elements to project outwards.

7. A coupling according to any of claims 1 to 6, characterized in that the means urging the trigger ring (18) towards its fitting position comprises a compression spring (20) disposed in a cylindrical recess in the control device (13), into which recess the trigger ring (18) may fit at least partly when pushed by fitting the female element (1) onto the male element.

8. A coupling according to any of claims 1 to 7, characterized in that the control device comprises means for latching into the locking position.

9. A coupling according to claim 8, characterized in that the latching means comprises a lug projecting from the peripheral surface of the fixed portion of the male element, said lug coacting to provide an abutment with the rear face of the sleeve of the control device and, for a predetermined angular position of the latter, engaging within a longitudinal cut in the latter.

10. A coupling according to any of claims 1 to 9 of the automatic shut off type, characterized in that the mechanical portion of the locking device is provided in the male element (7) and the valve device (4) for automatic shut off is disposed in the female element (1).

11. A coupling according to claim 10, characterized in that fluid-tightness between the female element (1) and the male element is ensured by an O-ring (3) disposed within the female element and coming to bear onto the peripheral surface of a nose (10) of the male element which pushes back the automatic valve (4) disposed in the female element (1).

12. A coupling according to claim 10, characterized in that the tubular body of the automatic valve (4) is extended through a nose which fits into the bore of the nose (10) of the male element having disposed therein an O-ring seal (3) and an O-ring seal (6) which is mounted on the periphery of the tubular body of the valve coacts in the coupled positions of the coupling with an internal cylindrical bearing surface (5) of the female element.

**Ansprüche**

1. Schlauchkupplung für Schläuche und ähnliches, bei welcher die Schlauchtülle (1) aus einem Körper mit einer axialen Bohrung besteht, die innen eine Verriegelungs-Umfangsrille (2) aufweist und der Stecknippel (7) aus einem Endstück besteht, auf welchem eine Verriegelungsvorrichtung angebracht ist, die in die axiale Bohrung der Schlauchtülle (1) eingeführt werden kann, wobei die Verriegelungsvorrichtung aus einem Einführungsglied (12) besteht, das zur Einführung in die Verriegelungsrille (2) der axialen Bohrung der Schlauchtülle (1) radial verstellbar ist, sowie aus einer Betätigungsvorrichtung der Verriegelung zur Kontrolle der radialen Verstellung des Einführungsglieds (12) nach aussen auf seine Verriegelungslage zu, wobei die Betätigungsvorrichtung in eine Entriegelungslage positiv geführt werden kann, welche die Abhebung des Einführungsglieds (12) aus der Rille (2) der Schlauchtülle (1) ermöglicht, wobei die Betätigungsvorrichtung der Verriegelung aus einer Muffe (13) besteht, die auf dem zylindrischen zentralen Körper des Stecknippels (7) längsverstellbar ist und das Ende der genannten Muffe (13) auf das Einführungsende des Stecknippels gerichtet ist und eine Nockenfläche (14-16) bildet und mit dem Einführungsglied (12) zusammenwirkt, um dieses radial nach aussen zu verstellen, wobei eine Feder (17) dazu neigt, diese Muffe (13) in die Verriegelungslage zu bringen, in der sie das Einführungsglied (12) radial nach aussen zurückschiebt, dadurch gekennzeichnet, dass ein Umfangsring, « Drücker » genannt (18), am Umfang des Stecknippels (7, 13) gleitend angebracht ist, um in der Entkopplungslage der Schlauchkupplung über das Einführungsglied (12) eingeführt zu werden, damit es in seiner zurückgezogenen Lage innerhalb des Körpers des Stecknippels gehalten wird.

2. Schlauchkupplung nach Anspruch 1, dadurch gekennzeichnet, dass der Drückerring (18) unter Federwirkung (20) dazu neigt, seine Einführungslage über dem Einführungsglied (12) einzunehmen.

3. Schlauchkupplung nach Anspruch 1 oder 2, dadurch gekennzeichnet, dass das Ende (19) des Drückerrings (18) so ausgebildet ist, dass es mit dem Einführungsglied (12) zusammenwirkt, damit es in Richtung auf seine Entriegelungslage zurückgeschoben wird.

4. Schlauchkupplung nach Anspruch 3, dadurch gekennzeichnet, dass das Einführungsglied aus Kugeln oder Zapfen (33) mit halbrundem Kopf besteht, deren zentrifugale Verstellung in ihrer mit dem Stecknippel kraftschlüssig verbundenen Lagerung (34) unter der Wirkung der Betätigungsvorrichtung erfolgt und von einem Anschlag begrenzt wird (Fig. 16-18).

5. Schlauchkupplung nach Anspruch 1 oder 2, dadurch gekennzeichnet, dass das Einführungsglied aus wenigstens einer Nase besteht, deren ein Ende (26) um eine Querachse herum beweglich ist und das andere Ende (28) angefast ist, damit es mit der Nockenfläche (14) der Muffe (13) zusammenwirkt, wobei die Nase bzw. Nasen mit Hilfe eines Federrings (29) in ihrer Lage gehalten wird bzw. werden (Fig. 9-11).

6. Schlauchkupplung nach Anspruch 1 oder 2, dadurch gekennzeichnet, dass das Einführungsglied aus einem Federring (21) besteht, der auf seinem Umfang vorspringende Elemente, wie Kugeln, Rollen (22) oder ähnliches aufweist, wobei die Nockenfläche der Muffe innerhalb des Federrings eingeführt wird, um die vorspringenden Elemente zu spreizen.

7. Schlauchkupplung nach einem der Ansprüche 1 bis 6, dadurch gekennzeichnet, dass das Element, das dazu neigt, den Drückerring (18) federnd in seine Einführungslage zu bringen, aus einer Druckfeder (20) besteht, die sich in einer zylindrischen Aussparung der Muffe (13) befindet, wobei der Drückerring (18) wenigstens teilweise in diese Aussparung eingeführt werden kann, wenn er durch das Einführen der Schlauchtülle (1) über den Stecknippel zurückgeschoben wird.

8. Schlauchkupplung nach einem der Ansprüche 1 bis 7, dadurch gekennzeichnet, dass die Betätigungsvorrichtung ein Arretierungsmittel in Verriegelungslage aufweist.

9. Schlauchkupplung nach Anspruch 8, dadurch gekennzeichnet, dass das Arretierungsmittel aus einer Nase besteht, die am Umfang des feststehenden Teils des Stecknippels vorspringt, zur Bildung eines Anschlags mit der hinteren Seite der Muffe der Betätigungsvorrichtung zusammenwirkt und bei einer bestimmten Ausrichtung der Muffe in eine Längsnut der selben eingeführt wird.

10. Schlauchkupplung nach einem der Ansprüche 1 bis 9, vom Typ mit selbsttätigem Verschluss, dadurch gekennzeichnet, dass der mechanische Teil der Verriegelungsvorrichtung im Stecknippel (7) und die Ventilvorrichtung (4) zum selbsttätigen Verschluss in der Schlauchtülle (1) ausgeführt ist.

11. Schlauchkupplung nach Anspruch 10, dadurch gekennzeichnet, dass die Dichtheit zwischen der Schlauchtülle (1) und dem Stecknippel durch einen O-Ring (3) gewährleistet ist, der sich in der Schlauchtülle befindet und an der Umfangsfläche des Fortsatzes (10) des Stecknippels abstützt, der das selbsttätige Ventil (4) in der Schlauchtülle (1) zurückschiebt.

12. Schlauchkupplung nach Anspruch 10, dadurch gekennzeichnet, dass der rohrförmige Körper des selbsttätigen Ventils (4) durch einen Fortsatz verlängert ist, der in den Hohlraum des Fortsatzes (10) des Stecknippels eindringt, innerhalb dessen sich ein O-Ring (3) befindet und dass ein O-Ring (6), der am Umfang des rohrförmigen Körpers des Ventils (4) angebracht ist, in den Kopplungslagen der Schlauchkupplung mit einer inneren zylindrischen Auflagefläche (5) der Schlauchtülle zusammenwirkt.

0 023 853

Fig:1

13 16 15 2 1 10

14 12 11

Fig:7 Fig:8

23 24

Fig:9

F 17 18 28 29 26 27 10

8 13 14 7 25

Fig:11 Fig:12

30 26

29 31 25 28

1

Fig:5

Fig:6

Fig:2

Fig:3

Fig:4

0 023 853

**Fig. 10**

18 · 2 · 29 · 1 · 3 · 5 · 6 · 4

17 · 13 · 25

**Fig. 13**

18 · 32 · 30 · 31 · 10

**Fig. 14**

18 · 2 · 32 · 1 · 3 · 10 · 5 · 6 · 4

17 · 13 · 14b · 14a · 7 · 30 · 31

**Fig. 15**

32 · 31 · 30

3

_Fig.16_

_Fig.17_

_Fig.18_